# FASCICULE DE BREVET EUROPEEN

(11) **EP 4 017 014 B1**
(45) Date de publication et mention de la délivrance du brevet: **01.03.2023**
(21) Numéro de dépôt: 21214884.5
(22) Date de dépôt: 15.12.2021
(51) Int. Cl.: H04N 21/436, G09G 5/00, H04N 21/4363, H04N 21/41, H04N 21/439

(54) **PROCÉDÉ ET DISPOSITIF DE CONTROLE DE L'ETAT D'UN DISPOSITIF COMPRENANT DES MOYENS DE TRANSFERT D'UNE SOURCE AUDIOVISUELLE ET DES MOYENS DE RESTITUTION D'UN SIGNAL AUDIO**
VERFAHREN UND VORRICHTUNG ZUR KONTROLLE DES ZUSTANDS EINER VORRICHTUNG, DIE MITTEL ZUR ÜBERTRAGUNG EINER AUDIOVISUELLEN QUELLE UND MITTEL ZUR WIEDERGABE EINES AUDIO-SIGNALS UMFASST
METHOD AND DEVICE FOR CONTROLLING THE CONDITION OF A DEVICE COMPRISING MEANS FOR TRANSFERRING AN AUDIOVISUAL SOURCE AND MEANS FOR RECOVERY OF AN AUDIO SIGNAL

(30) Priorité: 18.12.2020 FR 2013689
(43) Date de publication de la demande: 22.06.2022
(73) Titulaire: SAGEMCOM BROADBAND SAS, 92500 Rueil-Malmaison (FR)
(72) Inventeur: DELPLACE, Stéphane, 92500 RUEIL MALMAISON (FR); INDIVERI, Piero, 92500 RUEIL MALMAISON (FR)
(74) Mandataire: Cabinet Le Guen Maillet

(56) Documents cités:
- EP-A1- 1 816 868
- CN-U- 209 313 968
- US-A1- 2012 128 179
- US-A1- 2012 307 157
- HDMI: "High-Definition Multimedia Interface. Specification Version 1.4", INTERNET CITATION, 23 mars 2010 (2010-03-23), page 425pp, XP009133650, Extrait de l'Internet: URL:http://wenku.baidu.com/view/e7db77d184 254b35eefd34d0.html [extrait le 2010-06-16]
- Hdmi Forum: "High-Definition Multimedia Interface Specification Version 2.0", , 4 septembre 2013 (2013-09-04), XP055388172, Extrait de l'Internet: URL:hdmiforum.org [extrait le 2017-07-05]

## Description

### DOMAINE TECHNIQUE

La présente invention est dans le domaine de l'audiovisuel et plus particulièrement dans le contrôle de l'état et la mise en veille d'un dispositif comprenant des moyens de transfert d'une source audiovisuelle et des moyens de restitution d'un signal audio.

### ETAT DE LA TECHNIQUE ANTERIEURE

Les systèmes audiovisuels domestiques actuels utilisent des connexions, par exemple conformes à la spécification HDMI (High Définition Multimedia Interface en anglais) ou interface multimédia haute définition pour relier les différents dispositifs multimédias à un téléviseur.

Les dispositifs multimédias sont par exemple des sources audio/vidéo telles que des lecteurs Blu-ray, des boîtiers décodeurs de télévision numérique (Set-Top Box en anglais), des consoles de jeux vidéo, des amplificateurs audios, des enceintes acoustiques...

Les dispositifs multimédias se comportent vis-à-vis d'un téléviseur comme une source audiovisuelle ou comme une destination d'un signal audio.

La spécification HDMI à partir de la version 2.0 permet de déclarer un dispositif multimédia à la fois comme une source audiovisuelle et une destination de contenu audio. Ces dispositifs comprennent ainsi des moyens de transfert d'une source audiovisuelle et des moyens de restitution d'un signal audio qui peuvent à la fois être source d'un signal audiovisuel et restituer un signal audio.

Un dispositif comprenant des moyens de transfert d'une source audiovisuelle et des moyens de restitution d'un signal audio permet à un système audiovisuel de recevoir un contenu audiovisuel par l'intermédiaire d'une connexion HDMI ou permet la restitution par ledit dispositif d'un signal audio reçu via la connexion HDMI. Un tel dispositif ne permet pas au système audiovisuel de recevoir un contenu audiovisuel par l'intermédiaire d'une connexion HDMI et restituer par ledit dispositif d'un signal audio reçu via la connexion HDMI simultanément.

Lorsqu'un usager du système audiovisuel souhaite changer l'état de fonctionnement du dispositif comprenant des moyens de transfert d'une source audiovisuelle et des moyens de restitution d'un signal audio, par exemple passer dans le mode de transfert d'une source audiovisuelle vers le mode restitution de son, celui-ci doit désactiver le mode de transfert d'une source audiovisuelle et activer le mode restitution de son. Ceci peut être pénalisant pour l'usager en ce sens que celui-ci doit effectuer deux commandes distinctes pour réaliser le changement d'état.

Une solution consisterait à désactiver automatiquement les moyens de transfert d'une source audiovisuelle et d'activer automatiquement les moyens de restitution d'un signal audio. Cette solution obligerait néanmoins l'usager à effectuer des commandes supplémentaires lorsqu'il souhaitera mettre en veille les moyens de restitution d'un signal sonore.

Ces différentes commandes pour gérer l'état de fonctionnement du dispositif comprenant des moyens de transfert d'une source audiovisuelle et des moyens de restitution d'un signal audio compliquent la tâche de l'usager du système audiovisuel.

Dans le cas où l'état de fonctionnement du dispositif comprenant des moyens de transfert d'une source audiovisuelle et des moyens de restitution d'un signal audio est la mise en veille ou non de celui-ci, le dispositif comprenant des moyens de transfert d'une source audiovisuelle et des moyens de restitution d'un signal audio à la réception du signal de mise en veille, désactive les moyens de transfert d'une source audiovisuelle et les moyens de restitution d'un signal audio.

Cette mise en veille totale peut ne pas correspondre au souhait de l'usager dans le cas où celui-ci ne souhaitait mettre en veille qu'une seule des fonctionnalités du dispositif comprenant des moyens de transfert d'une source audiovisuelle et des moyens de restitution d'un signal audio. Pour pallier cela, différentes commandes seraient nécessaires pour gérer l'état de fonctionnement du dispositif comprenant des moyens de transfert d'une source audiovisuelle et des moyens de restitution d'un signal audio. Ce qui complique encore la tâche de l'usager du système.

La demande de brevet US 2012/307157 (D1) divulgue un système audiovidéo.

### EXPOSE DE L'INVENTION

L'invention vise à améliorer la gestion, par un usager d'un système audiovisuel, de l'état de fonctionnement d'un dispositif comprenant des moyens de transfert d'une source audiovisuelle et des moyens de restitution d'un signal audio.

A cette fin, selon un premier aspect, l'invention propose un procédé de contrôle de l'état d'un dispositif comprenant des moyens de transfert d'une source audiovisuelle et des moyens de restitution d'un signal audio selon la revendication 1.

L'invention concerne aussi un dispositif de contrôle de l'état d'un dispositif comprenant des moyens de transfert d'une source audiovisuelle et des moyens de restitution d'un signal audio selon la revendication 6.

Ainsi la présente invention permet de simplifier la tâche de l'usager du système dans la commande des différents états de fonctionnement du dispositif comprenant les moyens de transfert d'une source audiovisuelle et les moyens de restitution d'un signal audio.

La présente invention permet de basculer automatiquement du mode de fonctionnement source audiovisuelle vers le mode de fonctionnement restitution de signal audio pour reproduire un signal audio issu de la connexion HDMI.

Selon un mode particulier de l'invention, on met en veille le dispositif comprenant les moyens de transfert d'une source audiovisuelle et les moyens de restitution d'un signal audio si le dispositif comprenant les moyens de transfert d'une source audiovisuelle et les moyens de restitution d'un signal audio est dans le mode de fonctionnement de restitution d'un signal audio issu de la connexion HDMI.

Ainsi, la présente invention permet d'éviter les désagréments occasionnés par une mise en veille totale du dispositif comprenant des moyens de transfert d'une source audiovisuelle et des moyens de restitution d'un signal audio et de permettre à l'utilisateur du système audiovisuel de continuer à bénéficier de la fonctionnalité de reproduction de signaux audio lorsqu'un signal audio issu de la connexion HDMI est présent.

Selon un mode particulier de l'invention, si un signal audio issu de la connexion HDMI n'est pas présent, le procédé comporte en outre l'étape de mise en veille du dispositif comprenant les moyens de transfert d'une source audiovisuelle et les moyens de restitution d'un signal audio.

Ainsi, la présente invention permet de mettre en veille le dispositif comprenant des moyens de transfert d'une source audiovisuelle et des moyens de restitution d'un signal audio de manière simple pour l'usager du système audiovisuel.

Selon un mode particulier de l'invention, la mise en veille du dispositif comprenant les moyens de transfert d'une source audiovisuelle et les moyens de restitution d'un signal audio comprend la mise en veille ou l'extinction de tout ou partie des éléments du chemin de traitement et restitution audio, tels que par exemple un processeur de traitement de signal dédié aux traitements audio ou un amplificateur audio, sans que cette liste ne soit limitative.

La commande de changement d'état du dispositif comprenant les moyens de transfert d'une source audiovisuelle et les moyens de restitution d'un signal audio est une commande de mise en veille ou un message de type <Active Source> reçu sur un bus contrôle électronique grand public de la connexion HDMI.

Selon un mode particulier de l'invention, lorsque le dispositif comprenant les moyens de transfert d'une source audiovisuelle et les moyens de restitution d'un signal audio est dans le mode en source audiovisuelle, le dispositif comprenant les moyens de transfert d'une source audiovisuelle et les moyens de restitution d'un signal audio est dans le mode en source audiovisuelle, transfère uniquement la partie vidéo du signal audiovisuel et restitue par les moyens de restitution d'un signal audio la composante audio décodée du signal audiovisuel.

La présente invention concerne aussi un produit programme d'ordinateur. Il comprend des instructions pour implémenter, par un dispositif noeud, le procédé selon l'un des modes de réalisation précédents, lorsque ledit programme est exécuté par un processeur du dispositif noeud.

La présente invention concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système audiovisuel dans lequel la présente invention est implémentée ;
[Fig. 2] illustre schématiquement un exemple d'architecture matérielle d'un dispositif comprenant des moyens de transfert d'une source audiovisuelle et des moyens de restitution d'un signal audio ;
[Fig. 3] illustre schématiquement un procédé de contrôle de l'état d'un dispositif comprenant des moyens de transfert d'une source audiovisuelle et des moyens de restitution d'un signal audio.

### EXPOSE DETAILLE DE MODES DE REALISATION

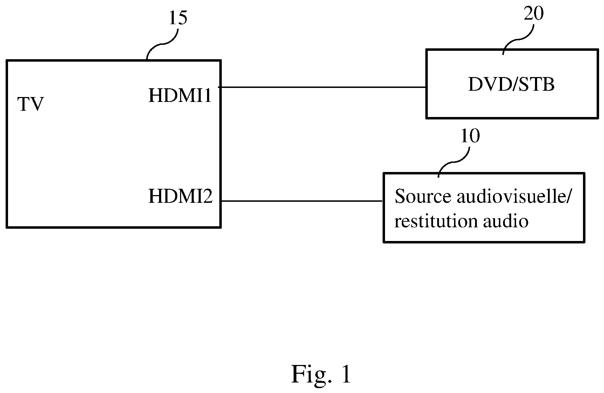

La Fig. 1 illustre schématiquement un système audiovisuel dans lequel la présente invention est implémentée.

Dans l'exemple de la Fig. 1, un téléviseur 15 est relié à une source audiovisuelle 20 et à un dispositif 10 comprenant des moyens de transfert d'une source audiovisuelle et des moyens de restitution d'un signal audio par l'intermédiaire de connexions HDMI.

La source audiovisuelle 20 est par exemple un lecteur Blu-ray, un boîtier décodeur de télévision numérique, ou une console de jeux vidéo. La source audiovisuelle est reliée au téléviseur 15 par un câble HDMI branché par exemple sur le port HDMI 1 du téléviseur 15.

Les moyens de transfert d'une source audiovisuelle du dispositif 10 sont par exemple un lecteur Blu-ray ou un boîtier décodeur de télévision numérique ou une console de jeux vidéo et les moyens de restitution d'un signal audio sont un amplificateur et au moins une enceinte acoustique, ou une sortie audio pouvant être amplifiée ou non amplifiée. Le dispositif est relié au téléviseur 15 par un câble HDMI branché par exemple sur le port HDMI 2 du téléviseur 15.

Par soucis de simplification, seuls deux dispositifs multimédias et deux ports HDMI sont représentés en Fig. 1. Bien entendu, le téléviseur 15 comporte un nombre plus important de ports HDMI où d'autres dispositifs multimédias peuvent être connectés.

A partir de la spécification HDMI 2.0, un dispositif multimédia peut se déclarer à la fois comme une source audiovisuelle et une destination de contenu audio.

Le téléviseur 15 attribue par exemple à la source audiovisuelle 20 connectée sur le port HDMI 1 l'adresse physique 1.0.0.0 et attribue par exemple au dispositif 10 comprenant des moyens de transfert d'une source audiovisuelle et des moyens de restitution d'un signal audio connecté sur le port HDMI 2 l'adresse physique 2.0.0.0.

La source audiovisuelle 20 recherche, dans une liste d'adresses logiques, la première adresse logique correspondant à son type. La source audiovisuelle 20 s'attribue une adresse logique système de lecture (playback system en anglais) comme décrit aux points 11.3.2 et 11.3. 3 de la spécification HDMI 2.0, par exemple l'adresse logique PLAYBACK1.

Le dispositif 10 comprenant des moyens de transfert d'une source audiovisuelle et des moyens de restitution d'un signal audio recherche dans une liste d'adresses logiques la première adresse logique correspondant à chacun de ses types. Le dispositif 10 comprenant des moyens de transfert d'une source audiovisuelle et des moyens de restitution d'un signal audio s'attribue la première adresse logique système de lecture disponible, par exemple l'adresse logique PLAYBACK2 et si l'adresse logique système audio AUDIOSYSTEM est disponible et se l'attribue, comme décrit aux points 11.3.2 et 11.3. 3 de la spécification HDMI 2.0.

Si l'adresse logique AUDIOSYSTEM n'est pas disponible, car un autre AUDIOSYSTEM est déjà présent, le dispositif 10 comprenant des moyens de transfert d'une source audiovisuelle et des moyens de restitution d'un signal audio :
- désactive la fonctionnalité système audio et réactive l'envoi du signal audio vers le téléviseur 15 par la connexion HDMI afin que le son soit restitué par le périphérique AUDIOSYSTEM déjà présent ou
- active les moyens de restitution d'un signal audio uniquement pour restituer la composante audio décodée d'un signal audiovisuel délivré par le dispositif, éventuellement en cessant de transmettre le signal audio par la connexion HDMI afin d'éviter une double restitution sonore ou
- commande la génération d'un message à destination de l'utilisateur notifiant celui-ci d'une impossibilité d'utiliser les moyens de restitution d'un signal audio du fait de la présence d'un autre système de restitution audio.

Lorsque le dispositif 10 comprenant des moyens de transfert d'une source audiovisuelle et des moyens de restitution d'un signal audio n'est pas dans le mode de fonctionnement source audiovisuelle, et reçoit du téléviseur 15 un message de requête en mode audio tel que le message < System Audio Mode Request [1.0.0.0] > tel que décrit dans la spécification HDMI 2.0 table 11.24, le dispositif 10 comprenant des moyens de transfert d'une source audiovisuelle et des moyens de restitution d'un signal audio répond que le système audio est activé en envoyant par exemple le message CEC < Set System Audio Mode (On) > tel que décrit dans la spécification HDMI 2.0 table 11.24, et restitue localement la composante audio issue du chemin de retour audio (ARC) de la connexion HDMI 2.

CEC est l'acronyme des termes anglais Consumer Electronic control, en français contrôle électronique grand public.

Plus précisément, le téléviseur 15 envoie au dispositif 10 comprenant des moyens de transfert d'une source audiovisuelle et des moyens de restitution d'un signal audio le message de type < System Audio Mode Request > avec l'adresse physique du dispositif d'où vient l'audio, par exemple l'adresse physique de la source audiovisuelle 20 dont le programme vidéo est reproduit par le téléviseur 15.

Lorsque le dispositif 10 comprenant des moyens de transfert d'une source audiovisuelle et des moyens de restitution d'un signal audio est dans un mode de fonctionnement en source audiovisuelle et que le dispositif 10 comprenant des moyens de transfert d'une source audiovisuelle et des moyens de restitution d'un signal audio reçoit du téléviseur 15 un message de requête en mode audio tel que le message < System Audio Mode Request [2.0.0.0] >, le dispositif 10 comprenant des moyens de transfert d'une source audiovisuelle et des moyens de restitution d'un signal audio répond que le système audio est activé en envoyant par exemple le message CEC < Set System Audio Mode (On) >, transfère uniquement la partie vidéo du signal audiovisuel et restitue localement par les moyens de restitution d'un signal audio 207 la composante audio décodée du signal audiovisuel.

Autrement dit, au moment de changer le port HDMI utilisé pour la source audiovisuelle, le téléviseur 15 envoie un message CEC < Set Stream Path >, le dispositif 10 comprenant des moyens de transfert d'une source audiovisuelle et des moyens de restitution d'un signal audio répond en envoyant au téléviseur 15 un message de type < Image View On > et diffuse un message de type < Active Source >.

En effet, utiliser le chemin de retour audio (ARC) dans ce cas, induirait une latence inutile et surtout limiterait la source audio à des formats compatibles ARC alors que les moyens de restitution d'un signal audio 207 peuvent supporter des formats audios supérieurs.

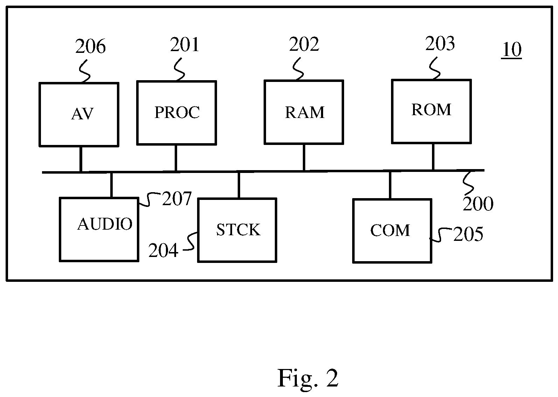

La Fig. 2 illustre schématiquement un exemple d'architecture matérielle d'un dispositif comprenant des moyens de transfert d'une source audiovisuelle et des moyens de restitution d'un signal audio.

Selon l'exemple d'architecture matérielle représenté à la Fig. 2, le dispositif 10 comprenant des moyens de transfert d'une source audiovisuelle et des moyens de restitution d'un signal audio comprend, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; des moyens de restitution audio AUDIO 206 et une source audiovisuelle AV 206, au moins une interface de communication 505 permettant au dispositif 10 comprenant des moyens de transfert d'une source audiovisuelle et des moyens de restitution d'un signal audio de communiquer par l'intermédiaire d'au moins un port HDMI avec le téléviseur 15 ou d'autres dispositifs multimédias et de communiquer par l'intermédiaire d'un réseau étendu non représenté en Fig. 1 lorsque celui comprend un décodeur de télévision numérique.

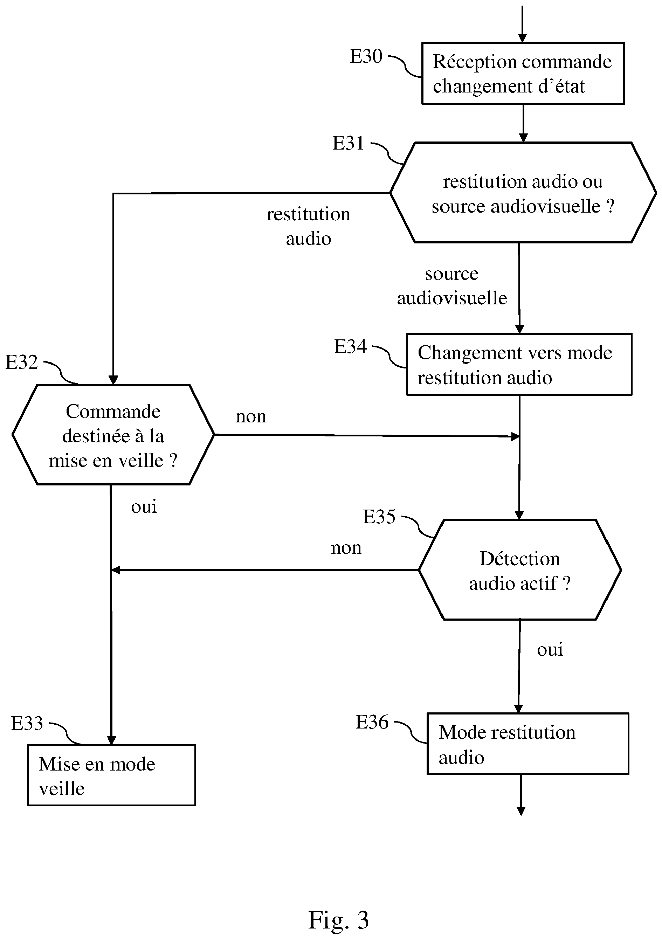

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif 10 comprenant des moyens de transfert d'une source audiovisuelle et des moyens de restitution d'un signal audio 0 est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec la Fig. 3.

Le procédé décrit ci-après en relation avec la Fig. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de détection d'incidents 10 comprend de la circuiterie électronique configurée pour mettre en oeuvre le procédé décrit en relation avec la Fig. 3.

La Fig. 3 illustre schématiquement un procédé de contrôle de l'état d'un dispositif comprenant des moyens de transfert d'une source audiovisuelle et des moyens de restitution d'un signal audio.

A l'étape E30, le dispositif comprenant des moyens de transfert d'une source audiovisuelle et des moyens de restitution d'un signal audio reçoit une commande émise par l'utilisateur du système audiovisuel.

La commande de changement d'état du dispositif 10 peut être initiée par différents moyens, tels que par exemple, et non limitativement, une action utilisateur dans le menu de l'interface graphique, la réception d'un message par le réseau, l'appui sur une touche du panneau frontal du dispositif, ou l'appui sur une touche d'une télécommande (par exemple touche de changement d'état ou touche de veille) permettant de piloter le dispositif.

De manière optionnelle, la commande de changement d'état peut aussi être reçue par la connexion HDMI, via le bus CEC, si un autre dispositif HDMI devient source audiovisuelle. Cela peut par exemple être le cas lors d'une sélection par l'utilisateur, dans l'interface de la télévision 15, d'un port HDMI relié à un autre équipement que le dispositif 10, ou lors de l'allumage d'un autre équipement HDMI tel que le dispositif 20, si ce dispositif se déclare en tant que source audiovisuelle active lors de son démarrage.

Dans de tels cas, le dispositif 10 reçoit sur le bus CEC un message de type <Active Source> provenant de la nouvelle source audiovisuelle. Le dispositif 10 considère alors ce message comme une commande de changement d'état.

A l'étape E31, le dispositif 10 détermine le mode de fonctionnement dans lequel il se trouve : source audiovisuelle ou mode audio. Si le dispositif 10 est dans le mode source audiovisuelle, le dispositif 10 passe à l'étape E34. Si le dispositif 10 est dans le mode audio, le dispositif 10 passe à l'étape E32.

A l'étape E32, le dispositif 10 détermine si la commande de changement d'état peut être ou non assimilée à une commande de mise en veille. Par exemple, un appui sur une touche «veille» est considéré comme assimilé à une commande de mise en veille, alors qu'un message <Active Source> reçu sur le bus CEC ou l'appui sur une touche de changement d'état sur la télécommande du dispositif 10 ne sont pas considérés comme assimilés à des commandes de mise en veille, même si ce sont des commandes de changement d'état.

Si le dispositif 10 détermine que la commande de changement d'état peut être assimilée à une commande de mise en veille, le dispositif 10 passe à l'étape E33. Si le dispositif 10 détermine que la commande de changement d'état n'est pas assimilable à une commande de mise en veille, le dispositif 10 passe à l'étape E35.

A l'étape E33, le dispositif 10 est mis en veille.

Par exemple, seulement le processeur 201 et la mémoire RAM 202 sont alimentés en énergie électrique ainsi que les composants nécessaires au redémarrage du dispositif 10 et lorsque l'utilisateur du dispositif 10 souhaitera remettre en marche le dispositif 10, le redémarrage sera effectué à partir du dernier état dans lequel le processeur 201 était, ou dans le mode de fonctionnement audio, ou dans le mode de fonctionnement source audiovisuelle, selon les choix d'implémentation ou les paramètres utilisateur.

Par exemple, seulement la mémoire RAM 202 est alimentée en énergie électrique ainsi que les composants nécessaires au redémarrage du dispositif 10 et lorsque l'utilisateur du dispositif 10 souhaitera remettre en marche le dispositif 10, le redémarrage sera effectué à partir du dernier état dans lequel la mémoire RAM 202 était ou dans le mode de fonctionnement audio ou dans le mode de fonctionnement source audiovisuelle.

Par exemple, le contenu de la mémoire RAM 202 est sauvegardé dans l'unité de stockage non volatile STCK 204, le processeur 201 et la mémoire RAM 202 ne sont plus alimentés en énergie électrique ainsi que les composants non nécessaires au redémarrage du dispositif 10. Lorsque l'utilisateur du dispositif 10 souhaitera remettre en marche le dispositif 10, le redémarrage sera effectué à partir du dernier état dans lequel l'unité de stockage non volatile STCK 204 était ou dans le mode de fonctionnement audio ou dans le mode de fonctionnement source audiovisuelle.

Par exemple, le processeur 201 et la mémoire RAM 202 ne sont plus alimentés en énergie électrique, seuls les composants nécessaires au redémarrage du dispositif 10 sont alimentés. Lorsque l'utilisateur du dispositif 10 souhaitera remettre en marche le dispositif 10, le redémarrage complet sera effectué à partir d'un mode dit de service.

A l'étape E34, le dispositif 10 bascule dans le mode de fonctionnement audio et vérifie à l'étape E35 si un signal audio est présent sur le chemin de retour audio ARC du port HDMI2.

Si un signal audio est présent sur le chemin de retour audio ARC du port HDMI 2, le dispositif 10 passe à l'étape E36. Dans la négative, le dispositif 10 passe à l'étape E33.

La non détection du signal audio sur le chemin de retour ARC est par exemple effectuée en détectant une absence de signal pendant une durée prédéterminée ou en détectant un signal qui ne comprend pas de données audio ou un signal audio dont l'amplitude est nulle ou inférieure à un seuil prédéterminé pendant une durée prédéterminée.

A l'étape E36, le dispositif 10 restitue localement la composante audio issue du chemin de retour audio (ARC) de la connexion HDMI 2 et ne passe pas ainsi en mode veille.

## Revendications

1. Procédé de contrôle de l'état d'un dispositif comprenant des moyens de transfert d'une source audiovisuelle et des moyens de restitution d'un signal audio, le dispositif étant relié à un téléviseur par l'intermédiaire d'une connexion de type interface multimédia haute définition HDMI conforme à une spécification HDMI version 2.0 ou supérieure, **caractérisé en ce que** le dispositif est dans un mode de fonctionnement en source audiovisuelle ou dans un mode de fonctionnement de restitution d'un signal audio issu de la connexion HDMI et le procédé comporte les étapes effectuées par le dispositif de :
- réception (E30) d'une commande de changement d'état du dispositif, la commande de changement d'état du dispositif étant une commande de mise en veille ou un message de type <Active Source> reçu sur un bus contrôle électronique grand public de la connexion HDMI, et suite à la réception de la commande de changement d'état :
- mise (E34) du dispositif dans le mode de restitution d'un signal audio issu de la connexion HDMI si le dispositif est dans le mode en source audiovisuelle,
- vérification (E35) si un signal audio issu de la connexion HDMI est présent et dans l'affirmative,
- restitution (E36) du signal audio issu de la connexion HDMI par les moyens de restitution d'un signal audio.

2. Procédé selon la revendication 1, **caractérisé en ce qu'**il comprend l'étape supplémentaire de :
- mise en veille du dispositif si le dispositif est dans le mode de fonctionnement de restitution d'un signal audio issu de la connexion HDMI.

3. Procédé selon la revendication 1, **caractérisé en ce que** si un signal audio issu de la connexion HDMI n'est pas présent, le procédé comporte en outre l'étape de mise en veille du dispositif.

4. Procédé selon l'une des revendications 2 à 3, **caractérisé en ce que** la mise en veille du dispositif comprend la mise en veille ou l'extinction d'un amplificateur audio.

5. Procédé selon l'une des revendications 1 à 4, **caractérisé en ce que** lorsque le dispositif est dans le mode en source audiovisuelle, le dispositif transfère uniquement la partie vidéo du signal audiovisuel et restitue par les moyens de restitution d'un signal audio la composante audio décodée du signal audiovisuel.

6. Dispositif de contrôle de l'état d'un dispositif comprenant des moyens de transfert d'une source audiovisuelle et des moyens de restitution d'un signal audio, le dispositif étant relié à un téléviseur par l'intermédiaire d'une connexion de type interface multimédia haute définition HDMI conforme à une spécification HDMI version 2.0 ou supérieure, **caractérisé en ce que** le dispositif est dans un mode de fonctionnement en source audiovisuelle ou dans un mode de fonctionnement de restitution d'un signal audio issu de la connexion HDMI et le dispositif comporte :
- des moyens de réception d'une commande de changement d'état du dispositif, la commande de changement d'état du dispositif étant une commande de mise en veille ou un message de type <Active Source> reçu sur un bus contrôle électronique grand public de la connexion HDMI,
- des moyens, activés suite à la réception de la commande de changement d'état, de mise du dispositif dans le mode de restitution d'un signal audio issu de la connexion HDMI si le dispositif est dans le mode en source audiovisuelle,
- des moyens, activés suite à la réception de la commande de changement d'état, de vérification si un signal audio issu de la connexion HDMI est présent et dans l'affirmative,
- des moyens, activés suite à la réception de la commande de changement d'état, d'activation des moyens de restitution d'un signal audio issu de la connexion HDMI.

7. Dispositif selon la revendication 6, le dispositif comportant en outre :
- des moyens de mise en veille du dispositif activés si le dispositif est dans le mode de fonctionnement de restitution d'un signal audio issu de la connexion HDMI,

8. Un produit programme d'ordinateur **caractérisé en ce qu'**il comprend des instructions pour implémenter, par un dispositif, le procédé selon l'une quelconque des revendications 1 à 5, lorsque ledit programme est exécuté par un processeur du dispositif.

9. Un support de stockage **caractérisé en ce qu'**il stocke un programme d'ordinateur selon la revendication 8.

## Patentansprüche

1. Verfahren zur Kontrolle des Zustands einer Vorrichtung, die Mittel zur Übertragung einer audiovisuellen Quelle und Mittel zur Wiedergabe eines Audiosignals umfasst, wobei die Vorrichtung über eine HDMI-Verbindung (High Definition Multimedia Interface), die der HDMI-Spezifikation Version 2.0 oder höher entspricht, mit einem Fernsehgerät verbunden ist, **dadurch gekennzeichnet, dass** sich die Vorrichtung in einer Betriebsart als audiovisuelle Quelle oder in einer Betriebsart zur Wiedergabe eines Audiosignals von der HDMI-Verbindung befindet und das Verfahren die folgenden von der Vorrichtung ausgeführten Schritte aufweist:
- Empfang (E30) eines Befehls zum Ändern des Zustands der Vorrichtung, wobei der Befehl zum Ändern des Zustands der Vorrichtung ein Standby-Befehl oder eine Nachricht vom Typ <Active Source> ist, die auf einem Unterhaltungselektronik-Steuerbus der HDMI-Verbindung empfangen wird, und nach dem Empfang des Befehls zum Ändern des Zustands:
- Einstellung (E34) der Vorrichtung auf die Betriebsart zur Wiedergabe eines Audiosignals von der HDMI-Verbindung, wenn sich die Vorrichtung in der Betriebsart als audiovisuelle Quelle befindet,
- Überprüfung (E35), ob ein Audiosignal von der HDMI-Verbindung vorliegt, und wenn ja,
- Wiedergabe (E36) des Audiosignals von der HDMI-Verbindung durch die Mittel zur Wiedergabe eines Audiosignals.

2. Verfahren nach Anspruch 1, **dadurch gekennzeichnet, dass** es den folgenden zusätzlichen Schritt aufweist:
- Einstellung der Vorrichtung auf Standby-Betrieb, wenn sich die Vorrichtung in der Betriebsart zur Wiedergabe eines Audiosignals von der HDMI-Verbindung befindet.

3. Verfahren nach Anspruch 1, **dadurch gekennzeichnet, dass**, wenn kein Audiosignal von der HDMI-Verbindung vorliegt, das Verfahren darüber hinaus den Schritt zur Einstellung der Vorrichtung auf Standby-Betrieb aufweist.

4. Verfahren nach einem der Ansprüche 2 bis 3, **dadurch gekennzeichnet, dass** die Einstellung der Vorrichtung auf Standby-Betrieb die Einstellung auf Standby-Betrieb oder das Ausschalten eines Audioverstärkers aufweist.

5. Verfahren nach einem der Ansprüche 1 bis 4, **dadurch gekennzeichnet, dass**, wenn sich die Vorrichtung in der Betriebsart als audiovisuelle Quelle befindet, die Vorrichtung nur den Videoteil des audiovisuellen Signals überträgt und über die Mittel zur Wiedergabe eines Audiosignals die decodierte Audiokomponente des audiovisuellen Signals wiedergibt.

6. Vorrichtung zur Kontrolle des Zustands einer Vorrichtung, die Mittel zur Übertragung einer audiovisuellen Quelle und Mittel zur Wiedergabe eines Audiosignals umfasst, wobei die Vorrichtung über eine HDMI-Verbindung (High Definition Multimedia Interface), die der HDMI-Spezifikation Version 2.0 oder höher entspricht, mit einem Fernsehgerät verbunden ist, **dadurch gekennzeichnet, dass** sich die Vorrichtung in einer Betriebsart als audiovisuelle Quelle oder in einer Betriebsart zur Wiedergabe eines Audiosignals von der HDMI-Verbindung befindet und die Vorrichtung Folgendes aufweist:
- Mittel zum Empfang eines Befehls zum Ändern des Zustands der Vorrichtung, wobei der Befehl zum Ändern des Zustands der Vorrichtung ein Standby-Befehl oder eine Nachricht vom Typ <Active Source> ist, die auf einem Unterhaltungselektronik-Steuerbus der HDMI-Verbindung empfangen wird,
- Mittel, die nach dem Empfang des Befehls zum Ändern des Zustands aktiviert werden, zur Einstellung der Vorrichtung auf die Betriebsart zur Wiedergabe eines Audiosignals von der HDMI-Verbindung, wenn sich die Vorrichtung in der Betriebsart als audiovisuelle Quelle befindet,
- Mittel, die nach dem Empfang des Befehls zum Ändern des Zustands aktiviert werden, zur Überprüfung, ob ein Audiosignal von der HDMI-Verbindung vorliegt, und wenn ja,
- Mittel, die nach dem Empfang des Befehls zum Ändern des Zustands aktiviert werden, zur Aktivierung der Mittel zur Wiedergabe eines Audiosignals von der HDMI-Verbindung.

7. Vorrichtung nach Anspruch 6, wobei die Vorrichtung darüber hinaus Folgendes aufweist:
- Mittel zur Einstellung der Vorrichtung auf Standby-Betrieb, die aktiviert werden, wenn sich die Vorrichtung in der Betriebsart zur Wiedergabe eines Audiosignals von der HDMI-Verbindung befindet.

8. Ein Computerprogrammprodukt, **dadurch gekennzeichnet, dass** es Anweisungen aufweist, um durch eine Vorrichtung das Verfahren nach einem der Ansprüche 1 bis 5 zu implementieren, wenn das Programm von einem Prozessor der Vorrichtung ausgeführt wird.

9. Ein Speichermedium, **dadurch gekennzeichnet, dass** es ein Computerprogramm nach Anspruch 8 speichert.

## Claims

1. Method for controlling the state of a device comprising means for transferring an audiovisual source and means for reproducing an audio signal, the device being connected to a television set by means of a connection of the high-definition multimedia interface type HDMI in accordance with an HDMI specification version 2.0 or higher, **characterised in that** the device is in a mode of operating as an audiovisual source or in an operating mode of reproducing an audio signal coming from the HDMI connection, and the method comprises the steps performed by the device of:
- receiving (E30) a command to change state of the device, the command to change state of the device being a command of sleep mode or a message of the <Active Source> type received on a consumer electronic control bus of the HDMI connection,
- and following the receiving of the command to change state :
- putting (E34) the device in the mode of reproducing an audio signal coming from the HDMI connection if the device is in the audiovisual source mode,
- checking (E35) whether an audio signal coming from the HDMI connection is present and, if so,
- reproducing (E36) the audio signal coming from the HDMI connection by the means for reproducing an audio signal.

2. Method according to claim 1, **characterised in that** it comprises the supplementary step of:
- putting the device in sleep mode if the device is in the operating mode of reproducing an audio signal coming from the HDMI connection.

3. Method according to claim 1, **characterised in that**, if an audio signal coming from the HDMI connection is not present, the method further comprises the step of putting the device in sleep mode.

4. Method according to one of claims 1 to 3, **characterised in that** putting the device in sleep mode comprises putting in sleep mode or switching off an audio amplifier.

5. Method according to one of claims 1 to 4, **characterised in that**, when the device is in the audiovisual source mode, the device transfers solely the video part of the audiovisual signal and reproduces, by the means for reproducing an audio signal, the decoded audio component of the audiovisual signal.

6. Device for controlling the state of a device comprising means for transferring an audiovisual source and means for reproducing an audio signal, the device being connected to a television set by means of a connection of the high-definition multimedia interface type HDMI in accordance with an HDMI specification version 2.0 or higher, **characterised in that** the device is in an audiovisual source operating mode or in an operating mode of reproducing an audio signal coming from the HDMI connection and the device comprises:
- means for receiving a command to change state of the device, the command to change state of the device being a command of sleep mode or a message of the <Active Source> type received on a consumer electronic control bus of the HDMI connection,
- means, activated after the receiving of the command to change state, for putting the device n the mode of reproducing an audio signal coming from the HDMI connection if the device is in the audiovisual source mode,
- means, activated after the receiving of the command to change state, for checking whether an audio signal coming from the HDMI connection is present and, if so,
- means, activated after the receiving of the command to change state for activating the means for reproducing an audio signal coming from the HDMI connection.

7. Device according to claim 6, the device further comprising:
- means for putting in sleep mode the device activated if the device is in the operating mode of reproducing an audio signal coming from the HDMI connection.

8. A computer program product, **characterised in that** it comprises instructions for implementing, by a device, the method according to any one of claims 1 to 5, when said program is executed by a processor of the device.

9. A storage medium, **characterised in that** it stores a computer program according to claim 8.
